# EUROPEAN PATENT SPECIFICATION

(11) **EP 0 560 377 B1**
(45) Date of publication and mention of the grant of the patent: **09.10.1996**
(21) Application number: 93104039.8
(22) Date of filing: 12.03.1993
(51) Int. Cl.: G03G 9/087

(54) **Toner composition for electrostatic developers**
Tonerzusammensetzung für elektrostatische Entwickler
Composition de toners pour révélateurs électrostatiques

(30) Priority: 13.03.1992 JP 89622/92
(43) Date of publication of application: 15.09.1993
(73) Proprietor: Dow Corning Toray Silicone Company, Limited, Tokyo 103 (JP)
(72) Inventor: Akamatsu, Shoji, Toray Dow Corning Silicone Co.Ltd, Ichihara-shi, Chiba Pref. (JP)
(74) Representative: Spott, Gottfried, Dr.

(56) References cited:
- DE-A- 3 739 217
- DE-A- 4 130 192
- PATENT ABSTRACTS OF JAPAN vol. 12, no. 417 7 November 1988 & JP-A-63 155 150
- PATENT ABSTRACTS OF JAPAN vol. 7, no. 176 4 August 1983 & JP-A-58 080 650

## Description

The present invention relates to a toner for electrostatic developer compositions. More particularly, this invention relates to a toner containing both organic and organopolysiloxane resins. The organosiloxane resin imparts charging characteristics that are very stable with respect to temperature and humidity. Preferred embodiments of the electrostatic developer toner (also referred to in this specification as ED toner) contain a white charging regulator comprising an aminoalkyl-containing organopolysiloxane resin.

ED toners typically contain a thermoplastic resin and at least one colorant as their principal ingredients along with various optional ingredients that include but are not limited to charging regulators, fluidizers, fillers and cleaners. The homogeneity, charging properties, fluidity, fusing characteristics, and other properties of ED toners can be regulated or adjusted by selecting particular combinations of these ingredients. DE-A-4 130 192 discloses toners comprising thermoplastics resin and an organopolysiloxane resin of which the Si-atoms carry hydrocarbon radicals or aminoalkyl radicals.

One problem with existing ED toners is a considerable variation of their charging properties with temperature and humidity. These ED toners do not release well from heated fixing rolls and as a result stain the surface of these rolls. In addition, the heavy metal-based organometallic compounds conventionally used as charging regulators are colored and toxic. As a consequence, the resulting ED toner is toxic to humans, contaminates the environment, and, in the case of color copiers, suffers from a degraded color tone.

The present invention solves the foregoing problems by providing releasable ED toner compositions whose charging properties are very stable with respect to temperature and humidity. An additional problem solved by the present invention is to provide releasable ED toners containing a white charging regulator comprising an aminoalkyl-containing organopolysiloxane resin which is less toxic and more environmentally acceptable than those of the prior art.

The solutions of the present invention can be achieved by using at least one of two specified classes of organosiloxane resins in combination with the thermoplastic organic resins and colorants typically present in ED toner compositions. The presence of an aminoalkyl radical in the organosiloxane resins imparts charge regulating properties to the toner composition.

The present invention relates to an improved ED toner composition for electrostatic developing, comprised of a thermoplastic organic resin and at least one colorant which is characterized by the presence in said composition of from 0.1 to 10 weight percent, based on the weight of said composition, of a thermoplastic organosiloxane. Said organosiloxane resin has a general formula selected from the group consisting of

(R¹SiO_{3/2})ₘ(R¹ ₂SiO)ₙ

and

(R²SiO_{3/2})ₘ(R² ₂SiO)ₙ

where each R¹ is individually selected from the group consisting of substituted and unsubstituted monovalent hydrocarbon radicals, each R² is individually selected from the group consisting of R¹ and aminoalkyl radicals, with the proviso that at least one R² represents an aminoalkyl radical, m and n are positive numbers and the softening points of both the organic and the organosiloxane resins are no higher than 200°C.

A thermoplastic organic resin is the principal component of the present toner compositions. This resin can be any of those typically used in ED toner compositions, including but not limited to polystyrene resins, alpha-methylstyrene resins, chlorostyrene resins, styrene/acrylic copolymers, styrene/butadiene copolymers, styrene/butyl methacrylate copolymers, styrene/divinylbenzene/ butyl acrylate copolymers, styrene/maleic acid copolymers, acrylic resins, methacrylic resins, ethyl methacrylate resins, butadiene resins, isoprene resins, acrylonitrile resins, vinyl ether resins, vinyl acetate resins, polycarbonate resins, polyurethane resins, fluororesins, polyester resins, epoxy resins, polyamide resins, and natural and synthetic waxes.

The thermoplastic organic resin has a softening point not higher than 200°C. The concentration of organic thermoplastic resin in the present toner compositions is not specifically restricted, however the resin preferably constitutes from 80 to 90 weight of the composition.

The organosiloxane resins that are the characterizing ingredient of the present toner compositions have the general formula (R¹SiO_{3/2})ₘ(R¹₂SiO)ₙ or (R²SiO_{3/2})ₘ(R²₂SiO)ₙ, where R¹ and R² represent substituted or an unsubstituted monovalent hydrocarbon radicals with the proviso that at least one R² represents an aminoalkyl radical, m and n are a positive numbers and the resins have softening points no higher than 200°C.

Specific examples of the monovalent hydrocarbon radicals represented by R¹ and R² include but are not limited to alkyl radicals such as methyl, ethyl, propyl, butyl, pentyl, and hexyl; alkenyl radicals such as vinyl, allyl, butenyl, and hexenyl; aryl radicals such as phenyl and tolyl; and substituted alkyl radicals such as chloromethyl and 3,3,3-trifluoropropyl. The subscripts m and n represent positive numbers.

The aminoalkyl radicals that are represented by at least one of the R² substituents include but are not limited to primary aminoalkyl radicals such as aminoethyl, aminopropyl, and aminobutyl; secondary aminoalkyl radicals such as N-methylaminopropyl and N-ethylaminopropyl; combinations of primary and secondary N-aminoalkyl-3-aminopropyl radicals such as N-(2-aminoethyl)-3-aminopropyl, and N-(3-aminopropyl)-3-aminopropyl; tertiary aminoalkyl radicals such as N,N-dimethylaminopropyl and N,N-methylethylaminopropyl; the hydrochloride of the N,N-dimethylaminopropyl radical; and quaternary aminoalkyl radicals.

Organosiloxane resins containing aminoalkyl radicals can be used as charging regulators that will control or regulate the polarity of the ED toner to a high positive polarity.

The organosiloxane resin must have a softening point not exceeding 200°C, and preferably not exceeding 150°C. This particular restriction makes possible the uniform dispersion of the organopolysiloxane resin in the thermoplastic organic resin by softening and melting the organopolysiloxane resin with the thermoplastic resin during preparation of the present ED toner compositions. The softening point of the organosiloxane resin is preferably no lower than room temperature in order to prevent bleed-out of the resin from the toner composition.

The organosiloxane resin constitutes from 0.1 to 10 weight percent, preferably from 1 to 5 weight percent, of the present toner compositions.

The presence of the organosiloxane resin stabilizes the charging characteristics of the toner composition with respect to temperature and humidity. In addition, toner compositions containing these resins release easily from heated fixing rolls. Because the organosiloxane resins are translucent or white, they will not adversely affect toner color in the case of ED toner for color copiers.

The colorant that is the second principal ingredient of the present ED toners determines the color of the ED toner. The type of colorant is not specifically limited. Examples of typical colorants include but are not limited to black pigments such as carbon black, oil black, graphite; organic dyes such as Quinoline Yellow, Phthalocyanine Blue and Malachite Green oxalate; acetoacetic arylamide-type monoazo yellow pigments such as C.I. Pigment Yellow 1, C.I. Pigment Yellow 3, C.I. Pigment Yellow 74, C.I. Pigment Yellow 97, and C.I. Pigment Yellow 98; acetoacetic arylamide-type diazo yellow pigments such as C.I. Pigment Yellow 12, C.I. Pigment Yellow 13, and C.I. Pigment Yellow 14; yellow dyes such as C.I. Solvent Yellow 19, C.I. Solvent Yellow 77, C.I. Solvent Yellow 79, and C.I. Solvent Yellow 164; red or magenta pigments such as C.I. Pigment Red 48, C.I. Pigment Red 49:1, C.I. Pigment Red 53:1, C.I. Pigment Red 57:1, C.I. Pigment Red 81, C.I. Pigment Red 122, and C.I. Pigment Red 5; red dyes such as C.I. Solvent Red 52, C.I. Solvent Red 58, and C.I. Solvent Red 8; blue dyes and pigments such as C.I. Pigment Blue 15:3 and copper phthalocyanine and its derivatives and modified products; green pigments such as C.I. Pigment Green 7, and C.I. Pigment Green 36; and colored and leuco sublimable dyes.

While the proportion of colorant in the present toner compositions is not specifically restricted, the toner preferably contains from 1 to 20 weight% of colorant.

In addition to the organic and silicone resins and at least one colorant the present composition can also contain any of the optional ingredients present in conventional toner compositions. These optional additives include but are not limited to charging regulators, fluidizers, fillers, and cleaners. Some of these optional ingredients are discussed in the following section of this specification.

Charging regulators control or regulate the amount of charge on the toner composition, and its type is not specifically limited. Suitable charging regulators include but are not limited to chromium complexes of azo dyes, chromium complexes of aromatic hydroxycarboxylic acids, aluminum complexes of aromatic hydroxycarboxylic acids and aromatic carboxylic acids, zinc complexes of aromatic hydroxycarboxylic acids and aromatic carboxylic acids, and boron complexes of aromatic hydroxycarboxylic acids and aromatic carboxylic acids.

When the organosiloxane resin ingredient contains aminoalkyl radicals, this resin functions as a charging regulator, making additional charging regulators only optional. The concentration of additional charging regulators in the toner composition is not specifically limited, however a content of 1 to 5 weight percent, based on the weight of the toner composition is generally preferred when the organosiloxane resin does not contain aminoalkyl radicals.

Fluidizers increase the flowability of the ED toner, and the specific type selected is not critical. Typical fluidizers include but are not limited to colloidal silica, metal soaps, and non-ionic surfactants. The concentration of fluidizer in the present toner compositions is not specifically restricted, but is preferably from 0.1 to 2 weight% of the total composition.

Specific types of fillers that can be present include but are not limited to silica, alumina, titanium dioxide, barium titanate, zinc oxide, quartz sand, iron oxide, ferrite, calcium carbonate, clay, and talc. While the concentration of filler is not specifically restricted, it is preferably from 1 to 5 weight percent, based on the total weight of the composition.

No specific limitations apply to the type of cleaner, which include but are not limited to metal salts of fatty acids, fluorine surfactants, and silicon oxide derivatives. The concentration of cleaner is preferably from 0.1 to 1 weight percent of cleaner.

The toner composition of the present invention can be prepared by mixing the organic and organosiloxane resins, colorant and any optional ingredients to homogeneity. The apparatus for preparing the present compositions is not specifically restricted, and conventional manufacturing equipment can be used. Examples of such equipment include but are not limited to Ross mixers, kneader mixers, ball mills, and Henschel mixers.

To achieve adequate blending of ingredients the temperature to which the composition is heated during preparation must be at least equal to the softening points of the thermoplastic and organopolysiloxane resins.

The organosiloxane resin imparts charging properties that are very stable with respect to temperature and humidity. As a consequence, the present toners are useful for use in copiers that are operated in harsh environments. Because present toner compositions release easily from the fuser roll, they makes possible a substantial simplification of the roll cleaning means such as fuser oil for fixing rolls.

Organosiloxane resins containing aminoalkyl radicals can also function as a white charging regulator. The resultant elimination of the requirement for an additional charging regulator simplifies preparation of the toner composition. Moreover, this type of organopolysiloxane resin can be used as a charging regulator in toner compositions for various types of color copiers. In this application it is less toxic to humans and more environmentally acceptable than prior art toner compositions.

The following examples describe preferred embodiments of the present toner compositions and should not be interpreted as limiting the scope of the present invention as described in the accompanying claims. Unless indicated to the contrary all parts are by weight and viscosities were measured at 25° C. Peel force was determined by thermally fixing at 150° C the toner composition as a thin layer on a 6 mm-thick sheet of silicone rubber intended for used as the hot pressure-fixing rolls of an electrostatic copier. A commercial pressure-sensitive adhesive tape (width = 1.8 cm) was applied over this, and high-speed peel testing was then carried out by pulling the tape away from the rubber at an angle of 180° and a peel rate of 100 m/minute.

### Reference Example 1

### Preparation of Organosiloxane Resin 1

100 g water, 100 g isopropyl alcohol, and 400 g toluene were placed in a 2 liter-capacity round-bottom flask equipped with a stirrer, thermometer, and addition funnel. A liquid mixture of 297 g (approximately 1.4 moles) of phenyltrichlorosilane, 76 g (approximately 0.3 moles) of diphenyldichlorosilane, and 39 g (approximately 0.3 moles) of dimethyldichlorosilane was then added dropwise into the flask during a 1 hour period with stirring. Following completion of this addition the reaction mixture was heated at reflux temperature for 2 hours and then cooled. Stirring was then discontinued, the contents of the flask were allowed to separate into two layers, and the lower (aqueous) layer was drawn off and discarded. 600 g of a 10 weight % aqueous sodium bicarbonate solution were added to the remaining organic layer followed by stirring for 30 minutes and then allowing the mixture to separate into aqueous and organic layers. The lower (aqueous) layer of the reaction mixture was again drawn off and was found to have a pH of 10.

The following process was then repeated twice: addition of 600 g water to the organic layer, stirring for 30 minutes, cessation of stirring, and removal of the lower (aqueous) layer.

The final organic layer containing toluene as the primary solvent was heated at 150°C under a pressure of 3.99 k Pa (30 torr) to remove the toluene and any other low boiling materials. The concentrated residue was transferred to a container as a thick liquid at 150°C. After cooling to room temperature, the resultant solid was ground in a mortar to yield a white finely divided organopolysiloxane resin. This resin (referred to as organosiloxane Resin 1) had a softening point of 95°C.

### Reference Example 2

### Preparation of Organosiloxane Resin 2

100 g water, 100 g isopropyl alcohol, and 400 g toluene were placed in 2 L round-bottom flask equipped with a stirrer, thermometer, and addition funnel. A liquid mixture of 297 g (approximately 1.4 moles) phenyltrichlorosilane, 76 g (approximately 0.3 moles) diphenyldichlorosilane, and 39 g (approximately 0.3 moles) dimethyldichlorosilane was then added to the flask dropwise over 1 hour while stirring. Following completion of this addition, the resultant liquid reaction mixture was heated at the reflux temperature for 2 hours and then cooled. Stirring was discontinued, the contents of the flask were allowed to settle, and the lower (aqueous) layer was drawn off and discarded. 600 g of a 10 weight% aqueous sodium bicarbonate were added to the-organic-layer followed by stirring for 30 minutes. After the reaction mixture had settled the lower (aqueous) layer was again drawn off and found to have a pH of 10. The following process was then repeated twice: addition of 600 g water, stirring for 30 minutes, settling of the reaction mixture and removal of the lower layer.

Using an evaporator to distill the toluene and water from the resulting organic layer, a toluene solution was prepared that contained 50% of volatile materials with a boiling point of 150°C. This toluene solution of organopolysiloxane resin had a viscosity of 6 centipoise (mPa.s). 25 g of N-(2-aminoethyl)-3-aminopropylmethyldimethoxysilane were then introduced into 500 g of this resin solution. After heating the resultant mixture for 5 hours at the reflux temperature the reaction mixture was heated at 150°C under a pressure of 3.99 k Pa (30 torr) to remove the toluene and other low boiling materials. The concentrated residue was transferred as a thick liquid to a metal vat while at temperature of 150°C and cooled to room temperature. The resultant white solid was ground in a mortar to yield a white finely divided organosiloxane resin containing N-(2-aminoethyl)-3-aminopropyl radicals bonded to silicon. This resin (referred to as Organosiloxane Resin 2) had a softening point of 80°C.

### Example 1

A toner composition of this invention with an average particle size of 15 micrometers was prepared by melt-blending a mixture composition of the following ingredients in a kneader mixer for 3 hours while heating, followed by cooling to room temperature, and then grinding and classifying the resultant solid.

| Ingredient | Parts by Weight |
|---|---|
| styrene/acrylic copolymer (softening point, 150°C) | 100 |
| organopolysiloxane resin 1 (Reference Example 1) | 5 |
| carbon black (#40) | 5 |

The resultant toner composition of this invention had a good flowability. The composition was also subjected to surface analysis for Si atoms using a scanning electron microscope equipped with a X-ray microanalyzer, referred to hereinafter as SEM-XMA. These analyses demonstrated an extremely homogeneous distribution of silicon.

1.5 weight parts of the toner composition were shaken for 10 minutes in a shaker with 30 weight parts of iron powder with average particle size of 300 micrometers. The resuitant mixture was placed on a stainless steel filter in a Faraday cage and a stream of nitrogen was blown through the filter for 30 seconds. The toner particles were forced through the holes in the filter under the pressure of the gas, leaving behind the iron particles with a charge that is of equal magnitude and opposite in polarity to the charge on the toner particles. This charge is then transferred to a capacitor in the Faraday cage circuit and the resultant charge (C) and voltage (V) were measured. The charge to mass ratio for the toner particles were calculated using the formula (C x V)/M, where M is the weight of the toner present in the initial mixture.

In order to examine the effects of temperature and humidity, the charged toner composition was spread in a glass petri dish and allowed to stand for 24 hours at 60°C and 95% relative humidity (RH), at which time the charge was measured again.

The releasability of the toner from a fuser roll heated at a temperature of 150°C was also measured. The results of all the evaluations are reported in Table 1.

### Example 2

A toner composition of this invention with an average particle diameter of 15 micrometers was prepared by melt-blending the following ingredients in a heated kneader mixer for 3 hours, cooling to room temperature and then grinding and classifying the resultant solid.

| Ingredient | Parts by Weight |
|---|---|
| styrene acrylic copolymer (softening point, 150°C) | 100 |
| Organosiloxane Resin 2 (Reference Example 2) | 5 |
| carbon black (#40) | 5 |

The resultant toner composition of this invention had a good flowability. The surface of the toner particles was also analyzed for silicon using SEM-XMA. These analyses demonstrated an extremely homogeneous dispersion of the Si.

1.5 weight parts of the toner composition were shaken for 10 minutes in a shaker with 30 weight parts iron powder with an average particle size of 300 micrometers. The charge to mass ratio of the toner particles was measured using the procedure described in Example 1.

The effects of temperature and humidity on the charged toner particles were determined by spreading the charged toner particles in a glass petri dish allowing the particles to stand for 24 hours at 60°C/RH 95% and repeating the charge and peel strength measurements. The results are reported in Table 1.

### Comparison Example 1

A prior art toner composition outside the scope of the present invention was prepared using the procedure and ingredients described in Example 1, but the organosiloxane resin was replaced with a commercial azine charging regulator. The resultant toner composition was evaluated as described in Example 1. and the results are reported in Table 1.

### Comparison Example 2

A prior art toner composition outside the scope of the present invention was prepared using the procedure and ingredients used to prepare the composition of Comparison Example 1, but with the addition of 0.5 weight parts of a liquid trimethylsiloxy-terminated polydimethylsiloxane with a viscosity of 500 centistokes (mm²/s). The resulting toner composition was evaluated as described in Example 1, and the results are reported in Table 1.

**Table 1**

| | charge (microcoulombs/g) | | | |
|---|---|---|---|---|
| Ex. | dispersibility | initial | after 24 hr. at 60°C | peel force g/cm |
| 1 | excellent | 13 | 12 | 20 |
| 2 | excellent | 27 | 25 | 23 |
| Comp. Ex. 1 | - | 25 | 11 | 41 |
| Comp. Ex. 2 | poor (oil bleed occurred) | 24 | 14 | 16 |

## Claims

1. A toner composition for electrostatic developing comprising a thermoplastic organic resin and at least one colorant, characterized by the presence in said composition of from 0.1 to 10 weight percent, based on the total weight of said composition, of an organosiloxane resin of a general formula selected from the group of
(R¹SiO_{3/2})ₘ(R¹ ₂SIO)ₙ
and
(R²SiO_{3/2})ₘ(R² ₂SiO)ₙ
where each R¹ is individually selected from the group consisting of substituted and unsubstituted monovalent hydrocarbon radicals, each R² is individually selected from the group consisting of R¹ and aminoalkyl radicals, with the proviso that at least one R² represents an aminoalkyl radical, m and n are positive numbers and the softening points of said organic and organosiloxane resins do not exceed 200°C.

2. A composition according to claim 1 where the softening point of said organosiloxane resin does not exceed 150° C, the R¹ radicals and the R² radicals other than aminoalkyl are selected from the group consisting of alkyl, alkenyl, aryl, and substituted alkyl radicals, the concentration of the organosiloxane resin is from 1 to 5 percent, based on the total weight of said composition, the concentration of said colorant is from 1 to 20 weight percent, based on the total weight of said composition, and said composition contains at least one optional ingredient selected from the group consisting of charging regulators. fluidizers, fillers, and cleaners.

3. A composition according to claim 2 where each R¹ and all but one of R² are selected from the group consisting of alkyl and aryl, and the remaining R² is N-(2-aminoalkyl)-3-aminopropyl.

## Patentansprüche

1. Tonerzusammensetzung für die elektrostatische Entwicklung umfassend ein thermoplastisches organisches Harz und mindestens einen Farbstoff, gekennzeichnet durch die Gegenwart von 0,1 bis 10 Gewichtsprozent, bezogen auf das Gesamtgewicht der Zusammensetzung, eines Organosiloxanharzes mit einer allgemeinen Formel ausgewählt aus der Gruppe
(R¹SiO_{3/2})ₘ(R¹ ₂SiO)ₙ
und
(R²SiO_{3/2})ₘ(R² ₂SiO)ₙ,
worin jeder Rest R¹ unabhängig ausgewählt ist aus der Gruppe bestehend aus substituierten und unsubstituierten monovalenten Kohlenwasserstoffresten, jeder Rest R² unabhängig ausgewählt ist aus der Gruppe bestehend aus R¹ und Aminoalkylresten, mit dem Vorbehalt, daß mindestens ein Rest R² einen Aminoalkylrest bedeutet, m und n positive Zahlen sind und die Erweichungspunkte des organischen und des Organosiloxanharzes 200°C nicht übersteigen, in der Zusammensetzung.

2. Zusammensetzung nach Anspruch 1, worin der Erweichungspunkt des Organosiloxanharzes 150°C nicht überschreitet, die Reste R¹ und die Reste R² außer den Aminoalkylresten ausgewählt sind aus der Gruppe bestehend aus Alkyl-, Alkenyl-, Aryl- und substituierten Alkylresten, die Konzentration des Organosiloxanharzes 1 bis 5 Gewichtsprozent ist, bezogen auf das Gesamtgewicht der Zusammensetzung, die Konzentration des Farbstoffs 1 bis 20 Gewichtsprozent, bezogen auf das Gesamtgewicht der Zusammensetzung, ist und die Zusammensetzung mindestens einen fakultativen Inhaltsstoff ausgewählt aus der Gruppe bestehend aus Ladungsreglern, Verflüssiger, Füllstoffen und Reinigern enthält.

3. Zusammensetzung nach Anspruch 2, worin der Rest R¹ und alle Reste R² bis auf einen ausgewählt sind aus der Gruppe bestehend aus Alkyl- und Arylresten, wobei der verbleibende Rest R² ein N-(2-Aminoalkyl)-3-aminopropylrest ist.

## Revendications

1. Composition de toner pour révélateur électrostatique, comprenant une résine organique thermoplastique et au moins un colorant, caractérisée par la présence, dans ladite composition, de 0,1 à 10 % en poids, sur la base du poids total de ladite composition, d'une résine d'organosiloxane dont la formule générale est choisie dans l'ensemble constitué par :
(R¹SiO_{3/2})ₘ(R¹ ₂SiO)ₙ
et
(R²SiO_{3/2})ₘ(R² ₂SiO)ₙ
où chaque R¹ est choisi individuellement dans l'ensemble constitué par les radicaux hydrocarbonés monovalents substitués et les radicaux hydrocarbonés monovalents non substitués, chaque R² est choisi individuellement dans l'ensemble constitué par R¹ et les radicaux aminoalkyles, avec la condition qu'au moins un radical R² représente un radical aminoalkyle, m et n sont des nombres positifs, et les points de ramollissement de ladite résine organique et de ladite résine d'organosiloxane ne dépassent pas 200°C.

2. Composition selon la revendication 1, dans laquelle ladite résine d'organosiloxanes a un point de ramollissement ne dépassant pas 150°C, les radicaux R¹ et les radicaux R² qui ne sont pas des radicaux aminoalkyles sont choisis dans l'ensemble constitué par les radicaux alkyles, alcényles, aryles et alkyles substitués, la concentration de la résine d'organosiloxanes est de 1 à 5 % sur la base du poids total de ladite composition, la concentration dudit colorant est de 1 à 20 % en poids sur la base du poids total de ladite composition, et ladite composition contient au moins un ingrédient facultatif choisi dans l'ensemble constitué par les régulateurs de charge, les fluidisants, les charges et les agents de nettoyage.

3. Composition selon la revendication 2, dans laquelle chaque R¹ et tous les radicaux R² sauf un sont choisis dans l'ensemble constitué par les radicaux alkyles et aryles, et le radical R² restant est le groupe N-(2-aminoalkyl)-3-aminopropyle.
